(19) Europäisches Patentamt
European Patent Office
Office européen des brevets

(11) Numéro de publication : **0 408 422 B1**

(12) **FASCICULE DE BREVET EUROPEEN**

(45) Date de publication du fascicule du brevet : **16.06.93 Bulletin 93/24**

(51) Int. Cl.$^5$ : **C08F 220/22**, C08F 220/26, C09D 133/14

(21) Numéro de dépôt : **90401924.7**

(22) Date de dépôt : **03.07.90**

# (54) Nouveaux copolymères acryliques et leur application au revêtement de matériaux bitumineux.

(30) Priorité : **06.07.89 FR 8909141**
**09.04.90 FR 9004505**

(43) Date de publication de la demande : **16.01.91 Bulletin 91/03**

(45) Mention de la délivrance du brevet : **16.06.93 Bulletin 93/24**

(84) Etats contractants désignés : **AT BE CH DE DK ES FR GB GR IT LI LU NL SE**

(56) Documents cités :
**EP-A- 0 091 021**
**EP-A- 0 152 889**
**AU-B- 530 687**
**DE-A- 2 539 393**

(73) Titulaire : **ELF ATOCHEM S.A.**
**4 & 8, Cours Michelet La Défense 10**
**F-92800 Puteaux (FR)**

(72) Inventeur : **Legros, Robert**
**72, route Cinqueux, Monceaux**
**F-60940 Cinqueux (FR)**
Inventeur : **Wiegert, Bernard**
**2, rue Frédéric Mistral**
**F-60870 Bernouville (FR)**
Inventeur : **Tripette, Claude**
**58, rue du Général de Gaulle**
**F-60180 Nogent S/Oise (FR)**

(74) Mandataire : **Rochet, Michel**
**ELF ATOCHEM S.A. Département Propriété Industrielle 4-8, Cours Michelet La Défense 10 - Cedex 42**
**F-92091 Paris-La-Défense (FR)**

EP 0 408 422 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention se rapporte à de nouveaux copolymères acryliques utiles pour le revêtement de matériaux bitumineux.

Les matériaux bitumineux sont bien connus comme produits d'étanchéité dans l'industrie du bâtiment et du génie civil, où ils sont utilisés notamment pour assurer l'étanchéité de surfaces minérales et d'éléments métalliques soumis à l'humidité tels que terrasses, pipelines, structures off-shore. Ils sont également bien connus dans l'industrie des travaux publics sous forme d'enrobés bitumineux épandus sur les routes, chaussées, pistes d'aéroport. Dans ces différentes applications, un inconvénient bien connu des matériaux bitumineux consiste dans la difficulté de les recouvrir d'une peinture ou d'un revêtement capable d'empêcher leur dégradation sous l'effet du rayonnement solaire et de modifier leur aspect esthétique et en particulier capable de remplacer leur couleur noire par une couleur plus claire au choix de l'utilisateur. Dans beaucoup de domaines de l'architecture et en particulier de la décoration des bâtiments, cet inconvénient a été la cause du remplacement des matériaux bitumineux par d'autres produits d'étanchéité plus onéreux mais dont l'aspect esthétique peut être modifié sans difficulté. Dans le domaine des travaux publics, une application bien connue de la peinture des matériaux bitumineux consiste dans les revêtements de signalisation de passages protégés pour piétons placés en travers des chaussées. Dans cette application, les difficultés d'adhésion de la peinture sur le matériau bitumineux entraînent, notamment sous l'effet combiné des intempéries et de la circulation des véhicules, l'obligation de procéder très fréquemment à la réfection de ces revêtements de signalisation.

Le but que se fixe la présente invention consiste en conséquence à proposer un nouveau revêtement de matériau bitumineux susceptible d'être lui-même recouvert d'un revêtement de finition, capable d'adhérer durablement audit matériau bitumineux (même sous l'action prolongée des intempéries) et capable d'éviter substantiellement le jaunissement de la couche de finition par migration ou exsudation des composés polyaromatiques et/ou des huiles fluxantes (chrysène) du matériau bitumineux vers l'extérieur.

En vue de résoudre le problème ainsi posé, un premier objet de la présente invention consiste donc en de nouveaux copolymères acryliques comprenant, pour 100 parties en poids :

- de 2 à 65 parties environ en poids d'au moins un acrylate ou méthacrylate de polyoxyéther de formule :

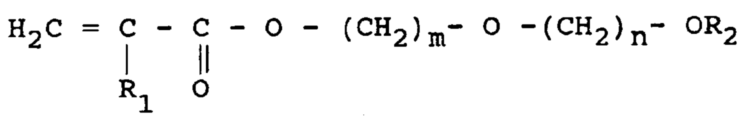

(I)

dans laquelle :

  - $R_1$ est un radical méthyle ou un atome d'hydrogène,
  - $R_2$ est un radical hydrocarboné ayant de 1 à 18 atomes de carbone,
  - $1 \leqq m \leqq 20$ et $1 \leqq n \leqq 20$,
- de 1 à 6 parties environ en poids d'anhydride acrylique ou méthacrylique,
- de 0 à 65 parties environ en poids d'au moins un acrylate ou méthacrylate d'alkyle fluoré, et
- de 0 à 97 parties environ en poids d'au moins un acrylate ou méthacrylate d'alcoxyalkyle.

Comme (méth)acrylate de polyoxyéther on peut citer notamment l'acrylate d'éthyldiglycol.

Par (méth)acrylate d'alkyle fluoré au sens de la présente invention on entend de préférence un composé de formule :

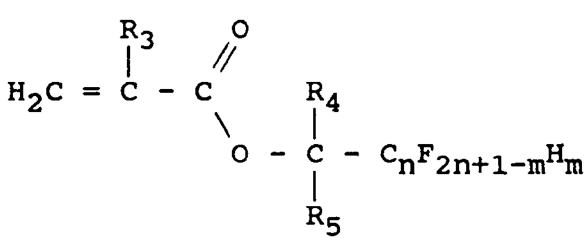

dans laquelle :

- $R_3$ est un radical méthyle ou un atome d'hydrogène,
- $R_4$ et $R_5$, identiques ou différents, sont choisis parmi H, $CH_3$, $CH_2$-$CH_3$ et $CF_3$ ;
- n est compris entre 1 et 20 ; et

- m est compris entre 0 et n.

Comme exemple de tel composé on peut citer le méthacrylate de 2,2,2-trifluoroéthyle.

Par (méth)acrylate d'alcoxyalkyle au sens de la présente invention on entend de préférence les composés de formule:

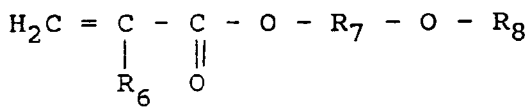

dans laquelle :

- $R_6$ est un radical méthyle ou un atome d'hydrogène, et
- $R_7$ et $R_8$, identiques ou différents, sont des radicaux alkyles, linéaires ou ramifiés, ayant de 1 à 6 atomes de carbone.

Comme exemple de tels composés on peut citer l'acrylate et le méthacrylate de méthoxyméthyle, d'éthoxyéthyle, d'éthoxyméthyle, de méthoxyéthyle, d'isopropoxyméthyle et d'isopropoxyéthyle.

Il est important de ne pas confondre les (méth)acrylates de polyoxyéther présents dans les copolymères selon l'invention avec des (méth)acrylates d'alkylène glycol se terminant par une fonction hydroxyle, ces derniers ne procurant pas les avantages attendus en fonction du but de la présente invention.

Les copolymères selon l'invention peuvent se présenter en dispersion aqueuse, l'extrait sec (teneur en matières solides) de ladite dispersion pouvant atteindre jusqu'à 70% environ en poids. La taille de particules de la dispersion aqueuse (déterminée par turbidimétrie) peut être comprise entre 0,05 et 0,5 μm environ. La viscosité Brookfield à 20°C d'une dispersion aqueuse de copolymère selon l'invention peut être généralement comprise entre 30 et 300 mPa.s.

Les copolymères acryliques selon l'invention peuvent en outre comprendre, pour 100 parties en poids, jusqu'à 5 parties environ d'acide acrylique et/ou jusqu'à 3 parties environ d'au moins un monomère réticulant de préférence choisi parmi les N-hydroxyalcoylamides des acides acrylique et méthacrylique, l'acrylamide, la méthacrylamide, le divinylbenzène et les oligoacrylates et oligométhacrylates de polyols tels que notamment le triéthylène-glycol di(méth)acrylate, l'éthylèneglycol diméthacrylate, le tétraéthylèneglycol di(méth)acrylate, le polyéthylèneglycol 200 di(méth)acrylate, le 1,6-hexanediol di(méth)acrylate, le néopentylglycol di(méth)acrylate, le 1,3-butylèneglycol di(méth)acrylate, le diéthylèneglycol di(méth)acrylate, le triméthylolpropane tri-(méth)acrylate, le di(méth)acrylate de bisphénol A éthoxylé, le tétraacrylate de pentaérythritol, le tripropylèneglycol diacrylate, le dipentaérythritol hydroxypentaacrylate, le triacrylate de trihydroxyéthylisocyanurate et le triacrylate de triméthylolpropane éthoxylé.

Un second objet de la présente invention concerne un procédé de fabrication d'un copolymère tel que décrit précédemment comprenant la polymérisation de monomères en émulsion dans l'eau, caractérisé en ce que pour 100 parties en poids le mélange de monomères à polymériser comprend :

- de 2 à 65 parties environ en poids d'au moins un acrylate ou méthacrylate de polyoxyéther de formule (I),
- de 1 à 6 parties environ en poids d'anhydride acrylique ou méthacrylique,
- de 0 à 65 parties environ en poids d'au moins un acrylate ou méthacrylate d'alkyle fluoré, et
- de 0 à 97 parties environ en poids d'au moins un acrylate ou méthacrylate d'alcoxyalkyle,
- de 0 à 5 parties d'acide acrylique, et
- de 0 à 3 parties d'au moins un monomère réticulant tel que décrit ci-dessus.

La polymérisation est généralement effectuée à une température comprise entre 55°C et 90°C environ, en présence d'au moins un initiateur capable de générer des radicaux libres, pendant une durée de 2 à 8 heures environ.

L'initiateur de polymérisation peut être notamment choisi parmi les persulfates, les peroxydes, les hydroperoxydes et les composés diazoïques ; lorsqu'un persulfate de métal alcalin est choisi, il peut être utilisé en combinaison avec un réducteur choisi parmi les polyhydroxyphénols, le sulfite et le bisulfite de sodium, le diméthylaminopropionitrile, les diazomercaptans et les ferricyanures. L'initiateur et, le cas échéant, le réducteur sont utilisables à raison de 0,1 à 2% chacun en poids par rapport à l'ensemble des monomères présents.

Comme il est connu, le procédé selon l'invention peut se dérouler en présence d'au moins un agent dispersant anionique, cationique ou non ionique, dont on utilise habituellement de 0,5 à 10% en poids par rapport à l'ensemble des monomères présents. Comme exemples d'agents dispersants utilisables lors de la mise en oeuvre d'un procédé de polymérisation selon la présente invention, on peut notamment citer des sels de métal alcalin et d'ammonium d'alcoyl-, aryl-, alcaryl- et aralcoyl-sulfonates et -sulfates, ou de polyéther-sulfates ; les

phosphates et phosphonates correspondants ; et des acides gras, esters, alcools, amines, amides et alcoylphénols éthoxylés.

Il peut en outre être avantageux d'effectuer la polymérisation en présence de 0,1 à 0,5 partie d'un tampon tel que le bicarbonate de sodium.

Comme il est bien connu dans ce domaine de la technique, le pH de la dispersion aqueuse obtenue par le procédé selon l'invention peut être ajusté à la valeur désirée par l'addition d'alcali ou d'amine. Si désiré, le copolymère selon l'invention peut être isolé à partir de la dispersion aqueuse le contenant par les techniques bien connues de floculation, congélation et atomisation.

Enfin, un troisième objet de la présente invention consiste en un procédé de revêtement de matériau bitumineux, caractérisé en ce que ledit matériau est revêtu d'une formulation comprenant une dispersion aqueuse d'un copolymère acrylique tel que défini précédemment avant, le cas échéant, application d'une couche de peinture de finition. Selon un mode de réalisation préféré du procédé de revêtement selon l'invention, on applique sur le matériau bitumineux une formulation comprenant de 40 à 75% en poids de la dispersion aqueuse selon l'invention.

Cette formulation comprend généralement en outre :

- au moins un diluant qui peut être l'eau, et/ou
- au moins un épaississant tel qu'un dérivé cellulosique (notamment l'hydroxyéthylcellulose), un polyuréthanne éthoxylé ou un polyacrylate, et/ou
- au moins un dispersant tel qu'un polyacrylate, un polymaléate ou l'hexamétaphosphate de sodium, et/ou
- au moins un agent biocide, et/ou
- au moins une charge lamellaire telle que silicate, alumine, mica, kaolin, talc, silice, graphite, poudre d'ardoise et/ou
- au moins un agent de coalescence tel que le butyldiglycol, et/ou
- au moins un pigment tel que la pâte d'aluminium, l'oxyde de fer ou l'oxyde de titane, et/ou
- au moins un agent anti-mousse.

La couche de finition que l'on applique le cas échéant sur la formulation à base de dispersion aqueuse de copolymère acrylique selon l'invention consiste en un revêtement décoratif de même nature que ceux habituellement applicables sur une couche de revêtement intermédiaire de type acrylique, par exemple une peinture glycérophtalique.

Le principal avantage du procédé de revêtement selon l'invention consiste dans le fait que la couche de revêtement intermédiaire obtenue à partir de la dispersion aqueuse précédemment définie adhère durablement au matériau bitumineux, même sous l'action prolongée des intempéries, et fait efficacement barrière à la migration et à l'exsudation des composés polyaromatiques et/ou des huiles fluxantes (chrysène) du matériau bitumineux vers la couche de finition, évitant ainsi le jaunissement prématuré de cette dernière.

Les exemples ci-après sont donnés à titre illustratif et non limitatif de la présente invention.

EXEMPLES 1 à 4

Dans un réacteur de 5 litres, on polymérise en discontinu un mélange de méthacrylate de 2,2,2-trifluoroéthyle (MATRIFE), d'acrylate d'éthyldiglycol (EDGA), d'anhydride méthacrylique (AMA), de méthacrylate d'éthoxyéthyle (MAEE), d'acide acrylique (AA) et de N-méthylolacrylamide (NMA) en émulsion dans 150 parties d'eau, en présence de 0,35 partie de persulfate d'ammonium et de 0,35 partie de métabisulfite de sodium en tant qu'initiateurs et en présence de 3 parties de nonylphénylsulfate de sodium à 25 moles d'oxyde d'éthylène en tant qu'agent tensio-actif. La polymérisation est effectuée à 68°C pendant 4 heures. On obtient ainsi une dispersion aqueuse ayant un extrait sec de 40% en poids, dont les particules ont une taille moyenne d, mesurée par turbidimétrie et exprimée en µm (microns), indiquée au tableau ci-après. Les quantités des différents monomères acryliques figurent également, exprimées en parties en poids, dans le même tableau, ainsi que la température minimale de filmification TMF, exprimée en degrés Celsius et définie comme étant la température en dessous de laquelle il n'est pas possible de former un film cohésif et adhésif sans impliquer la mise en oeuvre d'un agent de coalescence.

TABLEAU I

| Exemple | 1 | 2 | 3 | 4 |
|---|---|---|---|---|
| EDGA | 4 | 10,5 | 9 | 15,5 |
| MATRIFE | 5 | 10 | 5 | 10 |
| AMA | 4 | 4 | 4 | 4 |
| MAFE | 85 | 73,5 | 80 | 68,5 |
| AA | 1 | 1 | 1 | 1 |
| NMA | 1 | 1 | 1 | 1 |
| d | 0,14 | 0,10 | 0,10 | 0,11 |
| TMF | +10 | +1 | +3 | +3 |

On prépare ensuite des formulations comprenant, pour 1000 parties en poids :

- 476 parties en poids d'une dispersion aqueuse obtenue conformément au mode opératoire ci-dessus,
- 152 parties d'eau,
- 2 parties d'un gel d'éther cellulosique commercialisé sous la dénomination TYLOSE H 20 par la société HOECHST,
- 2 parties d'ammoniaque à 22%,
- 2 parties de dispersant polyacrylate commercialisé sous la dénomination COATEX P 890, par la Société d'Exploitation des Procédés Coatex,
- 2 parties d'un agent biocide commercialisé sous la dénomination PIROR P 840 par la société UNION CARBIDE,
- 2 parties d'un agent antimousse commercialisé par la société HENKEL sous la dénomination NOPCO NDW,
- 200 parties d'un silicate-alumine commercialisé sous la dénomination MICROMICA MU 2/1, par le Comptoir de Minéraux et Matières Premières,
- 5 parties de butyldiglycol (agent coalescent),
- 8 parties d'un polyuréthanne éthoxylé commercialisé sous la dénomination PRIMAL QR 1001 par la société ROHM & HAAS, et
- 150 parties de kaolin Suprême commercialisé par la Société ENGLISH CHINA CLAY.

Les formulations ainsi préparées sont caractérisées par leur pH à 20°C et les viscosités suivantes, mesurées à 20°C et exprimées en mPa.s :

- viscosité Brookfield à 50 tours/min. ($B_{50}$)
- viscosité Brookfield à 5 tours/min. ($B_5$)
- viscosité $\eta$ à $10^4 s^{-1}$.

Sur une plaque d'acier sablé de dimensions 7,5 x 15 cm, on applique successivement deux couches, à raison de 100 g/$m^2$ par couche, d'un brai-époxy commercialisé par la société COFIDEP sous la marque FREITABRAI, puis deux couches, à raison de 100 g/$m^2$ par couche, du revêtement intermédiaire constitué de la formulation ci-dessus, et enfin deux couches, à raison de 100 g/$m^2$ par couche, d'une peinture de finition glycérophtalique commercialisée par la société COFIDEP sous la marque RIPOLIN 500 SL.

Les caractéristiques des formulations sont indiquées au tableau II ci-après.

L'évaluation de la résistance à la migration des composés polyaromatiques et/ou des huiles fluxantes du brai-époxy est effectuée par mesure de l'indicateur colorimétrique L après 40 jours dont la valeur est indiquée au tableau II ci-après. L est la coordonnée trichromatique du système Hunter Lab = 10 $\sqrt{Y}$, Y étant le facteur de luminance lumineuse du système de repérage des couleurs défini par la Commission Internationale de l'Eclairage, avec L = 0 (noir) et L = 100 (blanc).

TABLEAU II

| Exemple | 1 | 2 | 3 | 4 |
|---|---|---|---|---|
| pH | 7,5 | 7,3 | 7,3 | 7,7 |
| $B_{50}$ | 76 | 66 | 86 | 42 |
| $B_5$ | 16,8 | 15,6 | 19,2 | 12 |
| $\eta$ | 0,5 | 0,5 | 0,55 | 0,55 |
| L | 93,6 | 92,6 | 92,7 | 91,2 |

EXEMPLE 5

Dans un réacteur de 5 litres, on polymérise en discontinu un mélange de 47,5 parties de méthacrylate de 2,2,2-trifluoroéthyle, de 47,5 parties d'acrylate d'éthyldiglycol, de 4 parties d'anhydride méthacrylique et de 1 partie de N-méthylolacrylamide en émulsion dans 150 parties d'eau, en présence de 0,35 partie de persulfate d'ammonium et de 0,35 partie de métabisulfite de sodium en tant qu'initiateurs et en présence de 3 parties de nonylphénylsulfate de sodium à 25 moles d'oxyde d'éthylène en tant qu'agent tensio-actif. La polymérisation est effectuée à 68°C pendant 4 heures. On obtient ainsi une dispersion aqueuse ayant un extrait sec de 39% en poids, dont les particules ont une taille moyenne, mesurée par turbidimétrie, de 0,10 μm. Cette dispersion peut en outre être caractérisée par :

- une température de transition vitreuse égale à -3°C,
- une viscosité Brookfield à 20°C, après neutralisation à pH 9, égale à 40 mPa.s.

On prépare ensuite une formulation comprenant, pour 1000 parties en poids :

- 576 parties de la dispersion aqueuse obtenue ci-dessus,
- 135 parties d'eau,
- 4 parties d'hydroxyéthyl cellulose,
- 2 parties d'aminométhylpropanol (neutralisant),
- 4 parties de polyacrylate commercialisé sous la dénomination COATEX P 890,
- 2 parties d'un agent biocide commercialisé sous la dénomination PIROR P 840,
- 2 parties d'un agent anti-mousse commercialisé sous la dénomination NOPCO NDW,
- 200 parties d'un silicate-alumine commercialisé sous la dénomination MICROMICA MU 2/1,
- 5 parties de butyldiglycol,
- 20 parties d'un polyuréthanne éthoxylé commercialisé sous la dénomination PRIMAL QR 1001, et
- 50 parties de pâte d'aluminium.

Sur une plaque d'acier sablé de dimensions 7,5 x 15 cm, on applique successivement deux couches, à raison de 100 g/$m^2$ par couche, d'un brai-époxy commercialié par la société COFIDEP sous la marque FREITABRAI, puis deux couches, à raison de 100 g/$m^2$ par couche, du revêtement intermédiaire constitué de la formulation ci-dessus, et enfin deux couches, à raison de 100 g/$m^2$ par couche, d'une peinture de finition glycérophtalique commercialisée par la société COFIDEP sous la marque RIPOLIN 500 SL.

Après 4 mois d'exposition à température ambiante, on peut considérer que la teinte de la peinture de finition est restée stationnaire. En effet, l'indice de jaunissement mesuré par colorimétrie est égal à 19. A titre de comparaison, l'indice de jaunissement de la peinture de finition en l'absence totale de revêtement intermédiaire est égal à 61 dans les mêmes conditions d'exposition.

**Revendications**

**Revendications pour les Etats contractants suivants : AT, BE, CH, LI, DE, DK, FR, GB, GR, IT, LU, NL, SE**

**1.** Copolymère acrylique comprenant, pour 100 parties en poids :

- de 2 à 65 parties en poids d'au moins un (méth)acrylate de polyoxyéther de formule :

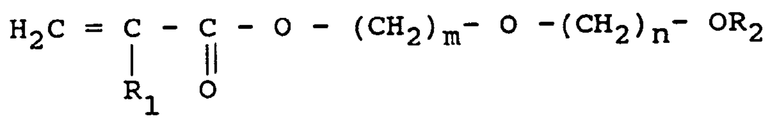 (I)

dans laquelle :

- $R_1$ est un radical méthyle ou un atome d'hydrogène,
- $R_2$ est un radical hydrocarboné ayant de 1 à 18 atomes de carbone,
- $1 \leqq m \leqq 20$ et $1 \leqq n \leqq 20$,

- de 1 à 6 parties en poids d'anhydride (méth)acrylique,
- de 0 à 65 parties en poids d'au moins un (méth)acrylate d'alkyle fluoré, et
- de 0 à 97 parties en poids d'au moins un (méth)acrylate d'alcoxyalkyle.

**2.** Copolymère selon la revendication 1, caractérisé en ce qu'il comprend en outre, pour 100 parties en poids, jusqu'à 5 parties d'acide acrylique.

**3.** Copolymère selon l'une des revendications 1 et 2, caractérisé en ce qu'il comprend en outre, pour 100 parties en poids, jusqu'à 3 parties d'au moins un monomère réticulant.

**4.** Copolymère selon l'une des revendications 1 à 3, caractérisé en ce que le (méth)acrylate d'alkyle fluoré est un composé de formule :

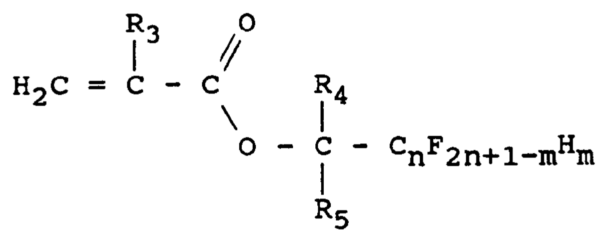

dans laquelle :

- $R_3$ est un radical méthyle ou un atome d'hydrogène,
- $R_4$ et $R_5$, identiques ou différents, sont choisis parmi H, $CH_3$, $CH_2$-$CH_3$ et $CF_3$ ;
- n est compris entre 1 et 20 ; et
- m est compris entre 0 et n.

**5.** Copolymère selon l'une des revendications 1 à 4, caractérisé en ce qu'il se présente en dispersion aqueuse.

**6.** Copolymère selon la revendication 5, caractérisé en ce que la taille des particules de la dispersion est comprise entre 0,05 et 0,5 µm.

**7.** Copolymère selon l'une des revendications 5 et 6, caractérisé en ce que la viscosité Brookfield à 20°C de la dispersion est comprise entre 30 et 300 mPa.s.

**8.** Procédé de fabrication d'un copolymère selon l'une des revendications 1 à 7, comprenant la polymérisation de monomères en émulsion dans l'eau, caractérisé en ce que pour 100 parties en poids le mélange de monomères à polymériser comprend :

- de 2 à 65 parties environ en poids d'au moins un acrylate ou méthacrylate de polyoxyéther de formule (I),
- de 1 à 6 parties environ en poids d'anhydride acrylique ou méthacrylique,
- de 0 à 65 parties environ en poids d'au moins un acrylate ou méthacrylate d'alkyle fluoré, et
- de 0 à 97 parties environ en poids d'au moins un acrylate ou méthacrylate d'alcoxyalkyle,
- de 0 à 5 parties d'acide acrylique, et
- de 0 à 3 parties d'au moins un monomère réticulant.

**9.** Procédé de revêtement de matériau bitumineux, caractérisé en ce que ledit matériau est revêtu d'une formulation comprenant une dispersion aqueuse d'un copolymère conforme à l'une des revendications 1 à 4.

**10.** Procédé de revêtement selon la revendication 9, caractérisé en ce que ladite formulation comprend en outre au moins un diluant et/ou un épaississant et/ou un dispersant et/ou un agent biocide et/ou une charge lamellaire et/ou un agent de coalescence et/ou un pigment et/ou un agent anti-mousse.

**Revendications pour l'Etat contractant suivant : ES**

**1.** Procédé de fabrication d'un copolymère acrylique comprenant, pour 100 parties en poids :

- de 2 à 65 parties en poids d'au moins un (méth)acrylate de polyoxyéther de formule :

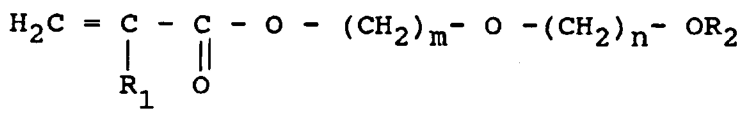

(I)

dans laquelle :

  - $R_1$ est un radical méthyle ou un atome d'hydrogène,
  - $R_2$ est un radical hydrocarboné ayant de 1 à 18 atomes de carbone,
  - $1 \leqq m \leqq 20$ et $1 \leqq n \leqq 20$,
- de 1 à 6 parties en poids d'anhydride (méth)acrylique,
- de 0 à 65 parties en poids d'au moins un (méth)acrylate d'alkyle fluoré, et
- de 0 à 97 parties en poids d'au moins un (méth)acrylate d'alcoxyalkyle,

caractérisé en ce qu'on conduit une polymérisation en émulsion dans l'eau du mélange de monomères tel que défini ci-dessus, à une température comprise entre 55 et 90°C environ, en présence d'au moins un initiateur capable de générer des radicaux libres, pendant une durée de 2 à 8 heures environ, le cas échéant en présence d'un agent dispersant anionique, cationique ou non-ionique, à raison notamment de 0,5 à 10% en poids par rapport à l'ensemble des monomères présents, et le cas échéant en présence de 0,1 à 0,5 partie d'un tampon tel que le bicarbonate de sodium.

**2.** Procédé selon la revendication 1, caractérisé en ce que le mélange de monomères comprend en outre, pour 100 parties en poids, jusqu'à 5 parties d'acide acrylique.

**3.** Procédé selon l'une des revendications 1 et 2, caractérisé en ce que le mélange de monomères comprend en outre, pour 100 parties en poids, jusqu'à 3 parties d'au moins un monomère réticulant.

**4.** Procédé selon l'une des revendications 1 à 3, caractérisé en ce que le (méth)acrylate d'alkyle fluoré est un composé de formule :

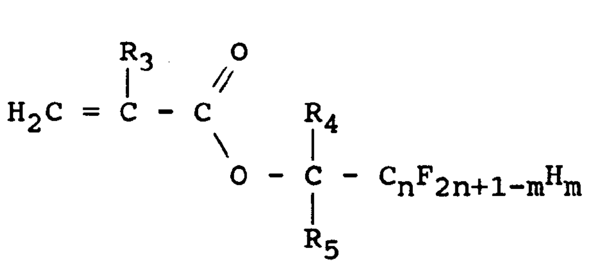

dans laquelle :

- $R_3$ est un radical méthyle ou un atome d'hydrogène,
- $R_4$ et $R_5$, identiques ou différents, sont choisis parmi H, $CH_3$, $CH_2$-$CH_3$ et $CF_3$ ;
- n est compris entre 1 et 20 ; et
- m est compris entre 0 et n.

5. Procédé selon l'une des revendications 1 à 4, caractérisé en ce que l'on obtient une dispersion aqueuse du copolymère acrylique recherché, dont la teneur en matières solides peut atteindre jusqu'à 70% environ.

6. Procédé selon l'une des revendications 1 à 5, caractérisé en ce que l'on obtient une dispersion aqueuse du copolymère acrylique recherché, dont la taille des particules est comprise entre 0,05 et 0,5 μm.

7. Procédé selon l'une des revendications 1 à 6, caractérisé en ce que l'on obtient une dispersion aqueuse du copolymère acrylique recherché, dont la viscosité Brookfield à 20°C de la dispersion est comprise entre 30 et 300 mPa.s.

8. Procédé de revêtement de matériau bitumineux, caractérisé en ce qu'on applique sur ledit matériau une formulation comprenant une dispersion aqueuse d'un copolymère préparée conformément à l'une des revendications 1 à 7, puis le cas échéant, on applique une couche de peinture de finition.

9. Procédé selon la revendication 8, caractérisé en ce qu'on applique sur le matériau bitumineux une formulation comprenant de 40 à 75% en poids de ladite dispersion aqueuse.

10. Procédé de revêtement selon l'une des revendications 8 et 9, caractérisé en ce que ladite formulation comprend en outre au moins un diluant et/ou un épaississant et/ou un dispersant et/ou un agent biocide et/ou une charge lamellaire et/ou un agent de coalescence et/ou un pigment et/ou un agent anti-mousse.

**Patentansprüche**

**Patentansprüche für folgende Vertragsstaaten : AT, BE, CH, LI, DE, DK, FR, GB, GR, IT, LU, NL, SE**

1. Acrylcopolymer enthaltend auf 100 Gewichtsteile: - 2 bis 65 Gewichtsteile mindestens eines Polyoxyether(meth)acrylats der Formel:

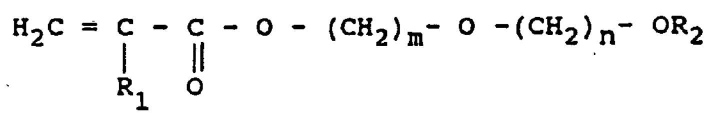 (I)

in der - $R_1$ ein Methylrest oder ein Wasserstoffatom ist; - $R_2$ ein Kohlenwasserstoffrest mit 1 bis 18 Kohlenstoffatomen ist;
- $1 \leqq m \leqq 20$ und $1 \leqq n \leqq 20$; - 1 bis 6 Gewichtsteile (Meth)acrylsäureanhydrid;
- 0 bis 65 Gewichtsteile mindestens eines Fluoralkyl(meth)acrylats, und - 0 bis 97 Gewichtsteile mindestens eines Alkoxyalkyl(meth)acrylats.

2. Copolymer nach Anspruch 1, dadurch gekennzeichnet, daß es weiters auf 100 Gewichtsteile bis zu 5 Teile Acrylsäure enthält.

3. Copolymer nach Anspruch 1 oder 2, dadurch gekennzeichnet, daß es weiters auf 100 Gewichtsteile bis zu 3 Teile mindestens eines Vernetzungsmonomers enthält.

4. Copolymer nach einem der Ansprüche 1 bis 3, dadurch gekennzeichnet, daß das Fluoralkyl(meth)acrylat eine Verbindung der Formel

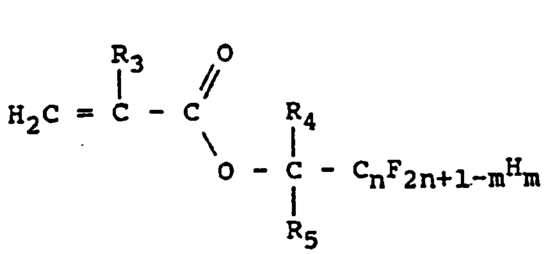

ist, in der - $R_3$ ein Methylrest oder ein Wasserstoffatom ist, - $R_4$ und $R_5$, identisch oder verschieden, ausgewählt sind aus der Gruppe bestehend aus H, $CH_3$, $CH_2$-$CH_3$ und $CF_3$, - n 1 bis 20 beträgt, und - m 0 bis n beträgt.

**5.** Copolymer nach einem der Ansprüche 1 bis 4, dadurch gekennzeichnet, daß es in wäßriger Dispersion vorliegt.

**6.** Copolymer nach Anspruch 5, dadurch gekennzeichnet, daß die Größe der Teilchen der Dispersion 0,05 bis 0,5 µm beträgt.

**7.** Copolymer nach Anspruch 5 oder 6, dadurch gekennzeichnet, daß die Brookfield-Viskosität bei 20°C der Dispersion 30 bis 300 mPa.s beträgt.

**8.** Verfahren zur Herstellung eines Copolymers nach einem der Ansprüche 1 bis 7, umfassend die Polymerisation der Monomere in Emulsion in Wasser, dadurch gekennzeichnet, die zu Polymerisierende Mischung der Monomere auf 100 Gewichtsteile enthält: - etwa 2 bis 65 Gewichsteile mindestens eines Polyoxyetheracrylats oder -methacrylats der Formel (I); - etwa 1 bis 6 Gewichtsteile Acryl- oder Methacrylsäureanhydrid; - etwa 0 bis 65 Gewichtsteile mindestens eines Fluoralkylacrylats oder -methacrylats, und - etwa 0 bis 97 Gewichtsteile mindestens eines Alkoxyalkylacrylats oder -methacrylats; - 0 bis 5 Teile Acrylsäure, und - 0 bis 3 Teile mindestens eines Vernetzungsmonomers.

**9.** Verfahren zum Überziehen von bituminösem Material, dadurch gekennzeichnet, daß das genannte Material mit einer eine wäßrige Dispersion eines Copolymers nach einem der Ansprüche 1 bis 4 enthaltenden Formulierung überzogen wird.

**10.** Verfahren zum Überziehen nach Anspruch 9, dadurch gekennzeichnet, daß die genannte Formulierung weiters mindestens ein Verdünnungs- und/oder Verdickungsmittel und/oder ein Dispergierungsmittel und/oder ein Biozid und/oder einen Lamellenfüllstoff und/oder ein Koaleszenzmittel und/oder ein Pigment und/oder ein Antischaummittel enthält.

**Patentansprüche für folgende Vertragstaaten : ES**

**1.** Verfahren zur Herstellung eines Acrylcopolymers enthaltend auf 100 Gewichtsteile:
- 2 bis 65 Gewichtsteile mindestens eines Polyoxyether(meth)acrylats der Formel :

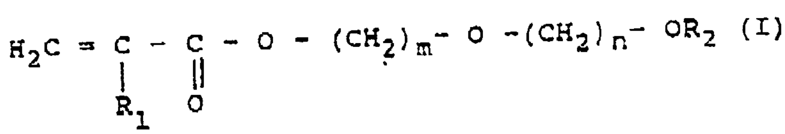

in der
  - $R_1$ ein Methylrest oder ein Wasserstoffatom ist,
  - $R_2$ ein Kohlenwasserstoffrest mit 1 bis 18 Kohlenstoffatomen ist,
  - $1 \leqq m \leqq 20$ und $1 \leqq n \leqq 20$,
- 1 bis 6 Gewichtsteile (Meth)acrylsäureanhydrid,
- 0 bis 65 Gewichtsteile mindestens eines Fluoralkyl(meth)acrylats, und
- 0 bis 97 Gewichtsteile mindestens eines Alkoxyalkyl(meth)acrylats,

dadurch gekennzeichnet, daß man eine Polymerisation der oben definierten Mischung von Monomeren in Emulsion in Wasser bei einer Temperatur von etwa 55° bis 90°C in Gegenwart mindestens eines zur Erzeugung freier Radikale fähigen Initiators für eine Dauer von etwa 2 bis 8 Stunden, gegebenenfalls in Gegenwart eines anionischen, kationischen oder nicht ionischen Dispergierungsmittels, insbesondere in einer Menge von 0,5 bis 10 Gew.-%, bezogen auf die Gesamtheit der vorhandenen Monomere, und gegebenenfalls in Gegenwart von 0,1 bis 0,5 Teilen eines Puffers, wie z.B. Natriumbicarbonat, durchführt.

**2.** Verfahren nach Anspruch 1, dadurch gekennzeichnet, daß die Mischung von Monomeren weiters auf 100 Gewichtsteils bis zu 5 Teilen Acrylsäure enthält.

3. Verfahren nach Anspruch 1 oder 2, dadurch gekennzeichnet, daß die Mischung von Monomeren weiters auf 100 Gewichtstelle bis zu 3 Teilen mindestens eines Vernetzungsmonomers enthält.

4. Verfahren nach einem der Ansprüche 1 bis 3, dadurch gekennzeichnet, daß das Fluoralkyl(meth)acrylat eine Verbindung der Formel

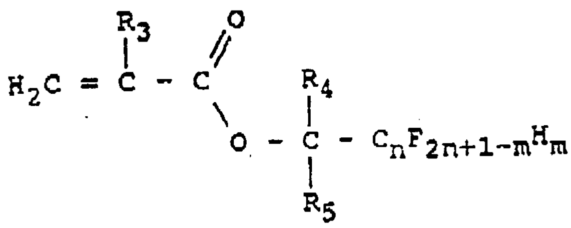

ist, in der - $R_3$ ein Methylrest oder ein Wasserstoffatom ist, - $R_4$ und $R_5$, identisch oder verschieden, ausgewählt sind aus der Gruppe bestehend aus H, $CH_3$, $CH_2$-$CH_3$ und $CF_3$, - n 1 bis 20 beträgt, und - m 0 bis n beträgt.

5. Verfahren nach einem der Ansprüche 1 bis 4, dadurch gekennzeichnet, daß man eine wäßrige Dispersion des angestrebten Acrylcopolymers erhält, deren Gehalt an Feststoffen bis zu etwa 70% erreichen kann.

6. Verfahren nach einem der Ansprüche 1 bis 5, dadurch gekennzeichnet, daß man eine wäßrige Dispersion des angestrebten Acrylcopolymers erhält, deren Teilchengröße 0,05 bis 0,5 µm beträgt.

7. Verfahren nach einem der Ansprüche 1 bis 6, dadurch gekennzeichnet, daß man eine wäßrige Dispersion des angestrebten Acrylcopolymers erhält, deren Brookfield-Viskosität bei 20°C 30 bis 300 mPa.s beträgt.

8. Verfahren zum Überziehen von bituminösem Material, dadurch gekennzeichnet, daß man auf das genannte Material eine Formulierung aufbringt, die eine nach einem der Ansprüche 1 bis 7 hergestellte wäßrige Dispersion eines Copolymers enthält, wonach man gegebenenfalls einen Deckanstrich aufbringt.

9. Verfahren nach Anspruch 8, dadurch gekennzeichnet, daß man auf das bituminöse Material eine 40 bis 75 Gew.-% der genannten wäßrigen Dispersion enthaltende Formulierung aufbringt.

10. Verfahren nach Anspruch 8 oder 9, dadurch gekennzeichnet, daß die genannte Formulierung weiters mindestens ein Verdünnungs- und/oder Verdickungsmittel und/oder ein Dispergierungsmittel und/oder ein Biozid und/oder einen Lamellenfüllstoff und/oder ein Koaleszenzmittel und/oder ein Pigment und/oder ein Antischaummittel enthält.

## Claims

### Claims for the following Contracting States : AT, BE, CH, LI, DE, DK, FR, GB, GR, IT, LU, NL, SE

1. Acrylic copolymer comprising, per 100 parts by weight:
   - from 2 to 65 parts by weight of at least one polyoxyether (meth)acrylate of formula:

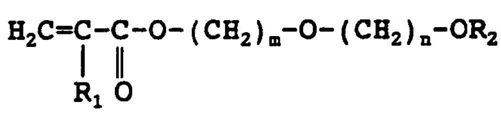 (I)

in which:
- $R_1$ is a methyl radical or a hydrogen atom,
- $R_2$ is a hydrocarbon radical containing from 1 to 18 carbon atoms,
- $1 \leqq m \leqq 20$ and $1 \leqq n \leqq 20$,

- from 1 to 6 parts by weight of (meth)acrylic anhydride,
- from 0 to 65 parts by weight of at least one fluoroalkyl (meth)acrylate, and
- from 0 to 97 parts by weight of at least one alloxyalkyl (meth)acrylate.

**2.** Copolymer according to Claim 1, characterised in that it additionally comprises up to 5 parts of acrylic acid per 100 parts by weight.

**3.** Copolymer according to either of Claims 1 and 2, characterised in that it additionally comprises up to 3 parts of at least one crosslinking monomer per 100 parts by weight.

**4.** Copolymer according to one of Claims 1 to 3, characterised in that the fluoroalkyl (meth)acrylate is a compound of formula:

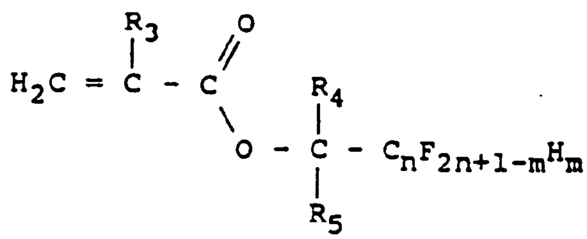

in which:
- $R_3$ is a methyl radical or a hydrogen atom,
- $R_4$ and $R_5$, which are identical or different, are chosen from H, $CH_3$, $CH_2$-$CH_3$ and $CF_3$,
- n is between 1 and 20, and
- m is between 0 and n.

**5.** Copolymer according to one of Claims 1 to 4, characterised in that it is in the form of an aqueous dispersion.

**6.** Copolymer according to Claim 5, characterised in that the particle size of the dispersion is between 0.05 and 0.5 μm.

**7.** Copolymer according to either of Claims 5 and 6, characterised in that in the Brookfield viscosity at 20°C of the dispersion is between 30 and 300 mPa s.

**8.** Process for the manufacture of a copolymer according to one of Claims 1 to 7, comprising the polymerisation of monomers in emulsion in water, characterised in that the mixture of monomers to be polymerised comprises, per 100 parts by weight:
- approximately from 2 to 65 parts by weight of at least one polyoxyether acrylate or methacrylate of formula (I),
- approximately from 1 to 6 parts by weight of acrylic or methacrylic anhydride,
- approximately from 0 to 65 parts by weight of at least one fluoroalkyl acrylate or methacrylate, and
- approximately from 0 to 97 parts by weight of at least one alkoxyalkyl acrylate or methacrylate,
- from 0 to 5 parts of acrylic acid, and
- from 0 to 3 parts of at least one crosslinking monomer.

**9.** Process for coating a bituminous material, characterised in that the said material is coated with a formulation comprising an aqueous dispersion of a copolymer in accordance with one of Claims 1 to 4.

**10.** Coating process according to Claim 9, characterised in that the said formulation additionally comprises at least one diluent and/or thickener and/or dispersant and/or biocidal agent and/or lamellar filler and/or coalescing agent and/or pigment and/or antifoaming agent.

**Claims for the following Contracting State : ES**

**1.** Process for the manufacture of an acrylic copolymer comprising, per 100 parts by weight:
- from 2 to 65 parts by weight of at least one polyoxyether ( meth ) acrylate of formula:

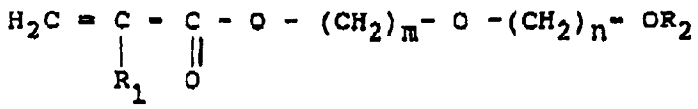 (I)

in which:

- $R_1$ is a methyl radical or a hydrogen atom,
- $R_2$ is a hydrocarbon radical containing from 1 to 18 carbon atoms,
- $1 \leqq m \leqq 20$ and $1 \leqq n \leqq 20$,

- from 1 to 6 parts by weight of (meth)acrylic anhydride,
- from 0 to 65 parts by weight of at least one fluorinated alkyl (meth)acrylate, and
- from 0 to 97 parts by weight of at least one alkoxyalkyl (meth)acrylate,

characterised in that a polymerisation in emulsion in water of the mixture of monomers as defined above is conducted at a temperature of approximately between 55 and 90°C in the presence of at least one initiator capable of generating free radicals, for a period of approximately from 2 to 8 hours, if appropriate in the presence of an anionic, cationic or nonionic dispersing agent, in a proportion especially of 0.5 to 10 % by weight relative to all the monomers present, and if appropriate in the presence of 0.1 to 0.5 parts of a buffer such as sodium bicarbonate.

**2.** Process according to Claim 1, characterised in that the mixture of monomers additionally comprises up to 5 parts of acrylic acid per 100 parts by weight.

**3.** Process according to either of Claims 1 and 2, characterised in that the mixture of monomers additionally comprises up to 3 parts of at least one crosslinking monomer, per 100 parts by weight.

**4.** Process according to one of Claims 1 to 3, characterised in that the fluorinated alkyl (meth)acrylate is a compound of formula:

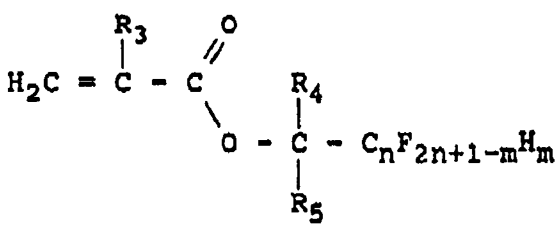

in which:

- $R_3$ is a methyl radical or a hydrogen atom,
- $R_4$ and $R_5$, which are identical or different, are chosen from H, $CH_3$, $CH_2$-$CH_3$ and $CF_3$;
- n is between 1 and 20; and
- m is between 0 and n.

**5.** Process according to one of Claims 1 to 4, characterised in that an aqueous dispersion of the required acrylic copolymer is obtained, in which the solid matter content may be up to approximately 70 %.

**6.** Process according to one of Claims 1 to 5, characterised in that an aqueous dispersion of the required acrylic copolymer is obtained, in which the particle size is between 0.05 and 0.5 µm.

**7.** Process according to one of Claims 1 to 6, characterised in that an aqueous dispersion of the required acrylic copolymer is obtained, in which the Brookfield viscosity of the dispersion at 20°C is between 30 and 300 mPa s.

**8.** Process for coating bituminous material, characterised in that a formulation comprising an aqueous dispersion of a copolymer prepared in accordance with one of Claims 1 to 7 is applied onto the said material and then, if appropriate, a layer of finishing paint is applied.

**9.** Process according to Claim 8, characterised in that a formulation comprising from 40 to 75 % by weight

of the said aqueous dispersion is applied onto the bituminous material.

**10.** Coating process according to either of Claims 8 and 9, characterised in that the said formulation additionally comprises at least one diluent and/or a thickener and/or a dispersant and/or a biocidal agent and/or a lamellar filler and/or a coalescing agent and/or a pigment and/or an antifoam agent.